# EUROPÄISCHE PATENTSCHRIFT

(11) **EP 3 620 756 B1**
(45) Veröffentlichungstag und Bekanntmachung des Hinweises auf die Patenterteilung: **14.07.2021**
(21) Anmeldenummer: 18193566.9
(22) Anmeldetag: 10.09.2018
(51) Int. Cl.: G01D 11/30, F17C 13/00

(54) **DRUCKFESTES GEHÄUSE MIT STROMDURCHFÜHRUNG**
PRESSURE-RESISTANT HOUSING WITH ELECTRICITY FEED-THROUGH
BOÎTIER RÉSISTANT À LA PRESSION DOTÉ D'UNE TRAVERSÉE DE COURANT

(43) Veröffentlichungstag der Anmeldung: 11.03.2020
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- US-A- 3 158 682
- US-A- 5 544 782
- US-A1- 2002 104 673
- US-A1- 2011 132 915

## Beschreibung

Die Erfindung betrifft ein Gehäuse mit zumindest einer Stromdurchführung, die gegen einen von außen wirkenden Hochdruck, z.B. von zumindest 1000 bar, z.B. bis 8000 bar, dicht ist. Dieses Gehäuse mit zumindest einer gegen von außen auf das Gehäuse wirkenden Hochdrucks festen Stromdurchführung kann in sich geschlossen sein oder als ein Gehäuseteil einen Flansch aufweisen, dessen Innenvolumen z.B. mit einem Bereich niedrigen Drucks verbunden ist, z.B. außerhalb eines in einer Hochdruckumgebung angeordneten Behälters angeordnet und mit dem Behälter verbunden sein, in dessen Innenvolumen der niedrigere Druck herrscht, oder innerhalb eines Behälters angeordnet sein, dessen Innenvolumen unter Hochdruck steht, und jeweils mit der Behälterwand verbunden sein. Das hochdruckfeste Gehäuse mit hochdruckfester Stromdurchführung kann ein außerhalb und/oder ein innerhalb des Gehäuses elektrisch angeschlossenes Element aufweisen, z.B. jeweils außerhalb und/oder innerhalb des Gehäuses, z.B. jeweils zumindest einen Sensor und/oder zumindest einen Aktor, das an die Stromdurchführung elektrisch angeschlossen ist. Dabei wird zumindest ein elektrischer Anschluß durch einen Leiter der hochdruckfesten Stromdurchführung gebildet und/oder zumindest ein elektrischer Anschluß wird von einem Teil des Gehäuses selbst gebildet, wenn dieses aus elektrisch leitfähigem Material besteht, z.B. Metall.

### Stand der Technik

Es ist bekannt, elektrische Leitungen mittels Stopfbuchsen druckfest durch Bohrungen in Gehäusen zu führen. Solche Stopfbuchsen können bei höheren Drucken undicht werden, z.B. kann Dichtungsmaterial herausschießen.

Die US 5,544,782 A beschreibt ein gegen hohen Innendruck oder gegen Vakuum im Innenvolumen beständiges Gehäuse, das aus zwei zylinderförmigen Gehäuseteilen, jeweils mit einem Deckel, zusammengestellt ist, wobei die Deckel des Gehäuses von einem Klammermechanismus gegeneinander gepresst werden.

Die US 3,159,682 A beschreibt einen elektrischen Fühler, der dicht durch die Wand eines Dampfkessels geführt werden kann. Zur Abdichtung eines Innenvolumens gegen den Außendruck wird ein hohlzylindrischer Isolator an beiden endständigen gefasten Kanten zwischen Metallstücken eingespannt, wobei separate Dichtungen zwischen Isolator und Metallstücken eingepresst werden.

Die US 2002/0104673 A1 beschreibt eine druckfeste Kabeldurchführung, bei der ein Kabel eine ringförmige Verdickung aufweist, die in einer Hülse gegen eine Dichtung anliegt.

### Aufgabe der Erfindung

Der Erfindung stellt sich die Aufgabe, ein hochdruckfestes Gehäuse mit hochdruckfester Stromdurchführung bereitzustellen, die bevorzugt bei Drucken von zumindest 1000 bar, bevorzugter zumindest 6000 bar dicht ist.

### Beschreibung der Erfindung

Die Erfindung löst die Aufgabe mit den Merkmalen der Ansprüche und stellt insbesondere ein Gehäuse mit zumindest einem ersten und einem zweiten Gehäuseteil bereit, die zwischen sich mit einander zugewandten und beabstandeten Auflageflächen, zwischen denen zumindest ein Isolator angeordnet ist, mit dem zumindest einen Isolator ein Innenvolumen dicht umfassen. Das Gehäuse ist einfach durch Beabstanden des ersten Gehäuseteils vom zweiten zu öffnen. Bevorzugt ist zwischen dem ersten und dem zweiten Gehäuseteil zumindest ein drittes Gehäuseteil angeordnet und jeweils zumindest ein Isolator zwischen den einander zugewandten und beabstandeten Auflageflächen benachbarter Gehäuseteile. Generell ist zwischen den Auflageflächen benachbarter Gehäuseteile zumindest ein Isolator angeordnet, so dass die Gehäuseteile voneinander elektrisch isoliert sind. In dieser Ausführungsform sind zumindest zwei der Gehäuseteile, bevorzugt alle Gehäuseteile, aus elektrisch leitfähigem Material, bevorzugt aus Metall gebildet und können elektrische Leiter bilden, z.B. mit jeweils zumindest einem elektrischen Anschluß auf der Innenseite des Gehäuses und mit jeweils zumindest einem elektrischen Anschluß auf der Außenseite des Gehäuses.

Die Auflagefläche erstreckt sich generell z.B. über einen Querschnitt der Wand eines Gehäuseteils, in einem Winkel von z.B. 30° bis 90°, bevorzugt senkrecht, zur Innenfläche und/oder Außenfläche eines Gehäuseteils.

In der Ausführungsform, in der ein Isolator zwischen den Auflageflächen benachbarter Gehäuseteile angeordnet ist, isoliert der Isolator die angrenzenden Gehäuseteile voneinander und die Gehäuseteile selbst bilden elektrische Leiter, die durch jeweils zumindest einen Isolator, der in jedem Zwischenraum zwischen den Gehäuseteilen bzw. zwischen den Auflageflächen angeordnet ist, elektrisch voneinander getrennt sind. In dieser Ausführungsform können die Gehäuseteile selbst elektrisch leitfähig sein und optional auf ihrer Innenfläche und/oder auf ihrer Außenfläche einen elektrischen Anschluß aufweisen. Bevorzugt weisen zumindest die Gehäuseteile, die eine Leitung bilden, oder alle Gehäuseteile, zumindest eine auf ihrer Außenfläche und/oder eine auf ihrer Innenfläche angeordnete dielektrische Beschichtung auf, die die Außenfläche und/oder die Innenfläche bis auf elektrische Anschlüsse vollständig überdeckt, wobei bevorzugt zumindest an den elektrischen Anschlüssen, die an der Außenfläche der Gehäuseteile angeordnet sind, elektrische Leitungen angeschlossen sind, die bevorzugt eine umfängliche und direkt an die dielektrische Beschichtung angrenzende Isolierung aufweisen. An den an elektrische Anschlüsse angeschlossenen elektrischen Leitungen kann ein elektrisches Element, z.B. ein Sensor und/oder ein Aktor elektrisch angeschlossen sein. Bevorzugt ist jedes Gehäuseteil, das einen elektrischen Anschluss aufweist, zumindest auf seiner Außenfläche vollständig mit einer dielektrischen Beschichtung versehen und daher elektrisch isoliert, wobei bevorzugt die elektrischen Anschlüsse mit isolierten Leitern belegt sind, an denen ein elektrisches Element elektrisch angeschlossen ist. Alternativ oder zusätzlich kann eine elektrische Leitung durch eine Leitungsschicht zwischen zumindest einem Isolator und einem Gehäuseteil gebildet sein, z.B. als Metallschicht einheitlicher Dicke zwischen zwei Isolatoren und/oder als Metallschicht zwischen einem Isolator und einem Gehäuseteil. Dabei kann zumindest eines der Gehäuseteile oder alle Gehäuseteile aus elektrisch nicht leitfähigem Material bestehen. Alternativ kann dabei zumindest eines der Gehäuseteile oder alle Gehäuseteile aus elektrisch leitfähigem Material bestehen und, so dass eine Leitung aus einer Metallschicht, die unmittelbar zwischen einem Isolator und einem Gehäuseteil angeordnet ist, in elektrischem Kontakt mit dem elektrisch leitfähigen Gehäuseteil stehen. Eine Leitungsschicht liegt bevorzugt mit einheitlicher Dicke über die vollständige Auflagefläche bzw. über eine Fläche an einem Isolator an, die gleich der vollständigen Auflagefläche ist. Optional ist jede Leitung zwischen zwei Isolatoren angeordnet.

Die Auflagefläche jedes Gehäuseteils erstreckt sich generell zwischen dessen Innenfläche und dessen Außenfläche und ist jeweils umfänglich geschlossen. Ein zwischen zwei beabstandeten Auflageflächen benachbarter Gehäuseteile angeordneter Isolator liegt daher umfänglich geschlossen mit seinen sich gegenüberliegenden Oberflächen an den beabstandeten Auflageflächen an, wobei die Auflageflächen durch statischen Druck, der auf die Außenfläche des Gehäuses wirkt, gegen den Isolator gepresst werden.

In einer Ausführungsform ist der Isolator ein isolierter Leiter, der zwischen den Auflageflächen der Gehäuseteile angeordnet ist und weist zumindest zwei Isolatorschichten auf, zwischen denen ein Leiter, z.B. eine flache Leiterbahn, angeordnet ist. In dieser Ausführungsform bildet der zwischen den Auflageflächen angeordnete isolierte Leiter eine Stromdurchführung.

Der Isolator weist in seiner Ausführungsform als isolierter Leiter zumindest einen Leiter auf, der zwischen Isolatorschichten angeordnet ist, oder besteht daraus, wobei die Isolatorschichten den Leiter in dem Bereich, der zwischen den Auflageflächen angeordnet ist, vollständig umschließen. Die Auflageflächen liegen jeweils auf gegenüberliegenden Oberflächen des isolierten Leiters auf, bevorzugt liegen die Auflageflächen vollflächig auf den äußeren Isolatorschichten des isolierten Leiters auf.

Bevorzugt weist die Auflagefläche des ersten Gehäuseteils eine gleich große Fläche mit dazu passender Form auf, z.B. eine kongruente Form oder dieselbe Form, wie die Auflagefläche des zweiten Gehäuseteils. Bevorzugt sind die Auflageflächen benachbarter Gehäuseteile, zwischen denen ein isolierter Leiter angeordnet ist, in einem einheitlichen Abstand zueinander angeordnet, bevorzugt mit zueinander kongruenter Form, z.B. in Form paralleler Flächen. Generell bevorzugt weist der Isolator bzw. der isolierte Leiter in dem zwischen den Auflageflächen angeordneten Bereich eine einheitliche Dicke auf. In der Ausführungsform mit zumindest einem isolierten Leiter können die Gehäuseteile unabhängig voneinander aus Metall oder einem nichtleitenden Material bestehen, z.B. aus Kunststoff und/oder Keramik.

Eine hochdruckdichte Anordnung des zumindest einen Isolators, der ein isolierter Leiter ist, zwischen Auflageflächen von Gehäuseteilen wird dadurch erzeugt, dass der Hochdruck, der bevorzugt ein statischer Hochdruck ist, auf die Außenflächen des Gehäuses wirkt und die Auflageflächen der Gehäuseteile gegeneinander an den dazwischen liegenden Isolator bzw. den isolierten Leiter presst. Entsprechend weist das Gehäuse optional keine Spannvorrichtung auf, die eingerichtet ist, eine auf die Auflageflächen wirkende Kraft entsprechend eines außen auf dem Gehäuse anliegenden Hochdrucks zu erzeugen. Optional weist das Gehäuse eine Spannvorrichtung auf, die eingerichtet ist, die Gehäuseteile mit einer Kraft gegeneinander und gegen den zumindest einen Isolator, der ein isolierter Leiter ist, zu pressen, die nur zur dichtenden Anordnung in niedrigem Druck, z.B. bis 1 oder bis 10 bar, ausreicht. Denn die Anordnung der Gehäuseteile an dem zumindest einen Isolator, der ein isolierter Leiter ist, dichtet das Innenvolumen des Gehäuses bei Hochdruck selbsttätig.

Generell bevorzugt sind die einander gegenüberliegend angeordneten Auflageflächen benachbarter Gehäuseteile zueinander passend parallel gewölbt oder geneigt, bevorzugt plan. Die Auflageflächen sind bevorzugt kontinuierliche Flächen. Die Auflageflächen können in einem Querschnitt jeweils senkrecht zur Auflagefläche gebogen sein, z.B. die eine Auflagefläche konvex und die passende konkav, mit demselben Profil bzw. demselben Radius, oder plan sein, bevorzugt zu einer gemeinsamen Zentralachse rotationssymmetrisch, optional geneigt und bevorzugt in zueinander parallel sein. Dabei kann die gemeinsame Zentralachse eine zentrale Symmetrieachse des Gehäuses sein. Generell bevorzugt sind die Auflageflächen plan und in parallelen Ebenen angeordnet, die weiter bevorzugt senkrecht zu einer zentralen Symmetrieachse des Gehäuses liegen.

Ein Vorteil des Gehäuses liegt darin, dass es bei von außen anliegendem Hochdruck selbstdichtend ist. Durch die Anordnung des Isolators können Ablösungen vom Isolator bevorzugt nicht frei in das Innenvolumen des Gehäuses hinein schießen, sondern z.B. parallel zur Ebene der Auflageflächen an die gegenüberliegende Wandung.

Weiter bevorzugt sind die Gehäuseteile zu einer gemeinsamen zentralen Symmetrieachse symmetrisch.

Der Isolator kann einschichtig oder mehrschichtig sein, insbesondere mit einer flächigen Form. Der Isolator kann z.B. ein Kunststoff sein, bevorzugt eine Polyimidschicht (z.B. Kapton), und/oder eine Keramik, optional ein- oder beidseitig mit einem weiteren Kunststoff beschichtet, der z.B. Polytetrafluorethylen (Teflon) ist, aufweisen oder daraus bestehen.

In der Ausführungsform des Isolators als isolierter Leiter weist dieser bevorzugt eine mit dem Leiter elektrisch verbundene äußere Anschlußfahne als elektrischen Anschluß auf, in der sich der Leiter, bevorzugt umfasst von den Isolatorschichten, über die Außenfläche des Gehäuses erstreckt, wobei die äußere Anschlußfahne einen nicht isolierten Abschnitt des Leiters bzw. eine am Leiter angeschlossene Leitung aufweist (z.B. Metalle, bevorzugt Kupfer, oder Carbon). Bevorzugt weisen die Isolatorschichten eines isolierten Leiters, die beidseitig des Leiters angeordnet sind, Kunststoff, bevorzugt eine Polyimidschicht (z.B. Kapton), und/oder eine Keramik, optional ein- oder beidseitig mit einem weiteren Kunststoff beschichtet, der z.B. Polytetrafluorethylen (Teflon) ist, oder die Isolatorschichten bestehen daraus.

Bevorzugt weist der isolierte Leiter eine mit dem Leiter elektrisch verbundene innere Anschlußfahne als elektrischen Anschluß auf, die sich über die Innenseite des Gehäuses in dessen Innenvolumen erstreckt und einen abisolierten Abschnitt des Leiters bzw. eine an einem Abschnitt des Leiters, insbesondere einer Anschlußfahne, angeschlossene Leitung aufweist.

Bevorzugt sind die innere und die äußere Anschlußfahne einander gegenüberliegend an einem gemeinsamen Abschnitt des Leiters angeordnet, z.B. entlang einer Senkrechten zu einer Außenwand des Gehäuses. Bei Gehäuseteilen, die elektrisch leitfähig sind und eine Leitung bilden, kann ein elektrischer Anschluß, generell auch als Anschlussfahne bezeichnet, als Ausnehmung, z.B. als Gewindebohrung, oder als Vorsprung, der über die Innenfläche bzw. über die Außenfläche des Gehäuses ragt, ausgebildet sein.

Optional kann der Isolator, bzw. in einer Ausführungsform der isolierte Leiter, bis auf zumindest einen elektrischen Anschluß, z.B. eine Anschlußfahne, der sich über die Außenfläche des Gehäuses erstreckt, bündig zur Außenfläche des Gehäuses sein. Optional kann sich der Isolator, bzw. in einer Ausführungsform der isolierte Leiter und darin der Leiter, über die Außenfläche des Gehäuses erstrecken. Alternativ können sich in der Ausführungsform als isolierter Leiter nur dessen Isolatorschichten über die Außenfläche des Gehäuses erstrecken, so dass der Leiter, bevorzugt mit Ausnahme zumindest einer äußeren und einer inneren Anschlußfahne, die sich über das Gehäuse erstrecken, nur im Bereich der Auflageflächen angeordnet ist.

In der Ausführungsform als isolierter Leiter bilden die äußere und die innere Anschlußfahne mit dem Leiter eine elektrische Leitung von der Außenfläche zur Innenfläche des Gehäuses, bzw. über den Querschnitt der Gehäusewand.

Optional kann das Gehäuse selbst, wenn es aus einem elektrisch leitfähigem Material gebildet ist, auch in der Ausführungsform des zumindest einen Isolators als isoliertem Leiter eine zweite Leitung bilden. Dabei kann zumindest ein Gehäuseteil auf seiner Innenfläche und/oder Außenfläche einen elektrischen Anschluß als Anschlussfahne aufweisen, optional nur auf seiner Innenfläche, wobei weiter optional eine im Innenvolumen angeordnete Anschlußfahne des isolierten Leiters den anderen elektrischen Anschluß im Innenvolumen bildet, der mit dem Außenvolumen elektrisch verbunden ist, insbesondere mit der äußeren Anschlußfahne.

Optional kann zumindest eines der Gehäuseteile (3a, 3b, 3c) aus elektrisch nichtleitfähigem Material bestehen, z.B. aus Keramik oder Kunststoff oder aus mit Kunststoff beschichteter Keramik. In Ausführungsformen des Isolators als isolierter Leiter oder bei Anordnung von zumindest zwei Leitungen, die jeweils durch eine Metallschicht gebildet sind und die durch zumindest einen zwischen sich angeordneten Isolator getrennt sind, können alle Gehäuseteile (3a, 3b, 3c) des Gehäuses 3 aus elektrisch nichtleitfähigem Material bestehen. Leitungen, die jeweils durch eine Leitungsschicht, z.B. eine Metallschicht, gebildet sind und die durch zumindest einen zwischen sich angeordneten Isolator getrennt sind, können z.B. auf ihren beiden gegenüberliegenden Flächen, die parallel zu den Auflageflächen sind, von Isolatoren überdeckt sein. Dabei ist bevorzugt, dass jeweils zwischen Leitungen, die durch eine Metallschicht gebildet sind, und zwischen Leitungen und Auflageflächen von Gehäuseteilen, jeweils zumindest ein Isolator angeordnet ist.

Der zwischen den Isolatorschichten angeordnete Leiter eines isolierten Leiters kann umfänglich geschlossen ausgebildet sein, so dass der Leiter zumindest zwischen den Auflageflächen, und insbesondere zwischen der Außenfläche und der Innenfläche, umfänglich geschlossen ist bzw. umfänglich um das Innenvolumen des Gehäuses verläuft, generell bevorzugt mit konstantem Querschnitt des Leiters und konstantem Querschnitt jeder Isolatorschicht. Diese Ausführungsform hat den Vorteil, dass der Querschnitt des isolierten Leiters mit Ausnahme von Anschlußfahnen entlang der Auflageflächen gleich ist, so dass z.B. der isolierte Leiter unter dem von außen von außen auf das Gehäuse wirkenden Hochdruck gleichmäßig belastet und ggf. verformt wird.

Optional kann sich der Leiter eines isolierten Leiters entlang des gesamten Umfangs des isolierten Leiters erstrecken, bzw. sich zwischen den Auflageflächen entlang deren gesamten Umfang verlaufen. Dabei kann sich optional der Leiter nur über einen Umfangsabschnitt des isolierten Leiters erstrecken, z.B. nur gradlinig, z.B. senkrecht zur Außen- und/oder Innenwand des Gehäuses, zwischen den Anschlussfahnen erstrecken.

Optional können bei der Ausführungsform des Isolators als isoliertem Leiter zumindest zwei getrennte Leiter zwischen zwei Isolatorschichten angeordnet sein, wobei sich die Leiter nicht berühren und jeweils mit einer inneren und einer äußeren Anschlußfahne kontaktiert sein. Dabei können sich die getrennten Leiter entlang des isolierten Leiters über einen umfänglichen Abschnitt erstrecken, z.B. abschnittsweise parallel oder nur in aneinander angrenzenden Abschnitten entlang des Umfangs des isolierten Leiters, und jeweils durch einen Abstand von den Anschlußfahnen und anderen Leitern getrennt sein.

Generell kann der Leiter als Metallschicht auf eine der Isolatorschichten oder auf beide Isolatorschichten aufgetragen sein, z.B. aufgesputtert oder aufgedruckt sein. Der Leiter und/oder elektrische Anschlüsse daran könnten z.B. Monolayer aus Carbon oder sehr dünn plattiertem leitenden Metallen sein, z.B. mit einer Schichtdicke von 10 bis 500 µm, z.B. 20 bis 100 µm, wobei die Schichtdicke vor einer Druckbeaufschlagung des Gehäuses bestimmt ist. Bevorzugt weist die Vorrichtung einen oder mehr zusätzliche isolierte Leiter auf, deren Leiter jeweils eine isolierte elektrische Leitung von der Außenfläche zur Innenfläche des Gehäuses bilden. Die isolierten Leiter sind bevorzugt baugleich. Die isolierten Leiter können z.B. um den Umfang der Auflageflächen versetzt oder einander überdeckend angeordnet sein. Die isolierten Leiter können zwischen den Auflageflächen direkt aufeinander liegen oder durch ein drittes Gehäuseteil oder mehrere dritte Gehäuseteile, zwischen dem ersten und dem zweiten Gehäuseteil angeordnet, voneinander beabstandet sein. Generell kann zumindest ein drittes Gehäuseteil z.B. zwischen dem ersten und zweiten Gehäuseteil angeordnet sein, wobei bevorzugt die Auflageflächen aller Gehäuseteile deckungsgleich angeordnet sind, insbesondere parallel und deckungsgleich. Entsprechend sind bevorzugt die Auflageflächen des dritten Gehäuseteils an dessen gegenüberliegenden Enden angeordnet und parallel zueinander. Das zumindest eine dritte Gehäuseteil weist z.B. angrenzend an seine Auflageflächen einen Querschnitt auf, der gleich dem Querschnitt des ersten und/oder des zweiten Gehäuseteils in dessen Auflagefläche ist.

Das Gehäuse eignet sich dadurch zur Verwendung in Medium mit Hochdruck, z.B. in Medium mit einem Hochdruck von zumindest 2000 bar, bevorzugt zumindest 2500 bar, zumindest 3000 bar, zumindest 3500 bar, zumindest 4000 bar, zumindest 4500 bar, zumindest 5000 bar, zumindest 5500 bar oder zumindest 6000 bar, z.B. bis 8000 oder bis 16000 bar, insbesondere Schritten von jeweils 100 bar, dass der Hochdruck des Mediums das erste und das zweite Gehäuseteil gegeneinander presst, bzw. diese an gegenüberliegende Seiten des zwischen diesen liegenden zumindest einen Isolators, der zumindest ein isolierter Leiter ist, presst, und dadurch der Isolator zwischen den Auflageflächen eine Dichtung bildet, die gegen das Eindringen von Medium zwischen den Isolator und eine Auflagefläche stabil und dicht ist. Entsprechend wird zumindest ein drittes Gehäuseteil durch das Pressen zwischen dem ersten und zweiten Gehäuseteil mit seinen Auflageflächen dichtend gegen die zwischenliegenden Isolatoren gepresst. Für einen Anpressdruck der Auflageflächen an den zwischenliegenden Isolator ist bevorzugt die Querschnittsfläche des Innenraums, die vom Isolator eingefasst wird, größer, z.B. um einen Faktor von zumindest 2, bevorzugter einen Faktor von zumindest 5 bevorzugter einen Faktor von zumindest 10 oder zumindest 100 größer, als die Auflagefläche, insbesondere als die größere von den enthaltenen Auflageflächen, die gegen einen Isolator angeordnet sind. Dabei ist für den Fachmann erkennbar, dass die Begrenzung in der maximal zulässigen Flächenpressung des Dichtmaterials (z.B. Kapton oder Keramik) liegt und daher die Auflageflächen ausreichend groß sind, um die maximale Flächenpressung nicht zu überschreiten. Das Material darf unter dem Anpressdruck letztlich nicht davonfließen. Zusätzlich ist bevorzugt die dem Medium ausgesetzte Umfangsfläche des zumindest einen Isolators kleiner, z.B. um einen Faktor von zumindest 0,01, von zumindest 0,5, von zumindest 2, von zumindest 5, zumindest 10 oder zumindest 50 oder zumindest 100 kleiner als die Querschnittsfläche des Innenraums, die vom Isolator eingefasst wird.

Das Leitermaterial eines isolierten Leiters ist bevorzugt aus Metall, z.B. Kupfer oder aus z.B. Graphen und kann eine Leiterbahn sein, die auf einer der Isolatorschichten aufgebracht ist, während die andere Isolatorschicht darauf angebracht ist, z.B. mittels einer Klebverbindung . Die leitende Schicht kann auch aus dotierten Kristallen oder einer leitenden Dotierung in Keramik hergestellt sein (z.B. 0,01 mm dick). Die Isolatorschichten weisen bevorzugt jeweils eine Dicke auf, bevorzugt weisen die Isolatorschichten, die einen Leiter zwischen sich einfassen, dieselbe Dicke auf. Die Leiterbahn kann eine datenübermittelnde Schicht sein und kann ein optischer Leiter, z.B. eine Lichtleitfaser sein, die hier nicht elektrisch angeschlossen ist, sondern optisch gekoppelt ist. Dabei kann die Energie für den Betrieb des außenliegenden Sensors oder Aktors z.B. auch optisch durch eine Lichtleitfaser übertragen werden.

Optional kann das Leitermaterial in einer Ausnehmung einer Isolierschicht angeordnet sein. In dieser Ausführungsform ist bevorzugt, dass das Leitermaterial die Ausnehmung genau ausfüllt.

Es hat sich gezeigt, dass die Auflagefläche des Isolators bzw. die Auflagefläche auf den Isolatorschichten auch in der Ausführungsform als isolierter Leiter ausreichend groß ist, um die zulässige Flächenpressung nicht zu überschreiten. Die Flächenpressung ergibt sich aus dem maximal zu erwartenden Druck, der auf das Gehäuse wirkt und der durch die Auflageflächen der Gehäusesegmente übermittelt wird. Der Isolator bzw. die Isolatorschichten in der Ausführungsform als isolierter Leiter können z.B. aus Kunststoff bestehen, bevorzugt aus Polyimid, z.B. unter der Bezeichnung Kapton von DuPont erhältlich. Es hat sich gezeigt, dass Isolatoren, bzw. Isolatorschichten eines isolierten Leiters, aus Polyimidfolie (Kapton), zwischen denen ein Leiter aus Kupfer einer Dicke von ca. 15 - 20 µm und einer Breite von ca. 12 mm umfänglich geschlossen angeordnet war, im Hochdruck von 2000 bis 6000 bar (Wasser als Druckmedium) eine Abdichtung eines Gehäuses bildete (z.B. Innendurchmesser d=32 mm, Außendurchmesser d=64 mm). Generell kann das Gehäuse in einem Hochdruckbehälter angeordnet sein, der eingerichtet ist, dass sein Innenvolumen mit dem Hochdruck beaufschlagbar ist. Entsprechend betrifft die Erfindung auch die Verwendung des hochdruckfesten Gehäuses in einem Hochdruckbehälter.

Generell ist bevorzugt, dass die Isolatorschichten unmittelbar auf den Auflageflächen liegen, d.h. keine zusätzliche Dichtungsmasse, z.B. kein Klebstoff, zwischen den Isolatorschichten und den Auflageflächen der Gehäuseteile angeordnet ist.

Die Gehäuseteile können, unabhängig voneinander oder gleich, aus Metall, z.B. Stahl, Keramik und/oder Glas bestehen. Bevorzugt ist jedes Gehäuseteil einstückig.

Ein Gehäuseteil kann optional eine konvexe, z.B. bogenförmige, kegelförmige oder polygone Außenfläche aufweisen oder eine ebene Außenfläche, optional von der Auflagefläche beabstandet, oder z.B. plattenförmig sein. Die Innenfläche eines Gehäuseteils, die an die Auflagefläche angrenzt, kann eine Ausnehmung bilden, z.B. konkav bogenförmig, zylindrisch oder kegelförmig sein, oder plattenförmig sein. In dem von den Gehäuseteilen umfassten Innenvolumen kann als elektrisches Element ein z.B. batteriebetriebener Aktor angeordnet und elektrisch mit dem zumindest einen Leiter, optional direkt mit dem Gehäuse kontaktiert sein. Das elektrische Element kann z.B. eine elektronische Speichereinheit, ein Sender und/oder Empfänger für akustische, optische oder elektromagnetische Funksignale, und/oder Sensordaten speichern, z.B. mit einem Datenlogger verbunden sein.

Ein elektrische Element, das an zumindest einem Leiter angeschlossen ist und außerhalb oder innerhalb des Gehäuses angeordnet ist, kann z.B. ein Sender oder ein Empfänger und/oder eine Antenne zum Senden und/oder Empfangen sein.

Bevorzugt weist ein Gehäuse als elektrisches Element einen außerhalb angeschlossenen zusätzlichen Sensor oder Aktor auf, der mit dem innerhalb des Gehäuses angeordneten elektrischen Element, das z.B. Sender oder Empfänger und/oder eine innerhalb des Gehäuses angeordneten Stromquelle ist, kontaktiert ist. Z.B. kann der zusätzliche Sensor einer für die Temperatur, den Druck, die Leitfähigkeit oder eine andere Eigenschaft des das Gehäuse umgebenden Mediums sein, wobei der Sensor außerhalb des Gehäuses angeordnet ist und elektrisch mit dem innerhalb des Gehäuses angeordneten Sender oder Empfänger verbunden ist. Ein Sender kann ein Schallerzeuger sein und ein Empfänger ein Mikrofon. Dabei können optional Sender bzw. Empfänger jeweils innerhalb ihres Gehäuses angeordnet und bevorzugt zur Schallübertragung fest mit einem Gehäuseteil verbunden sein. In der Ausführung eines Senders als im Gehäuse angeordneter Schallerzeuger bzw. eines im Gehäuse angeordneten Empfängers als Mikrofon werden Schallwellen durch die Gehäuseteile geleitet und als Körperschallwelle (Longitudinalwelle und/oder Transversalwelle durch das Gehäuse) des Gehäuses an das umgebende Medium abgegeben bzw. aus dem Medium aufgenommen. Sender und Empfänger können generell z.B. mit einer Steuerungseinheit verbunden sein, die eingerichtet ist, digitale Signale, ein serielles Protokoll und/oder frequenzmodulierte Signale zu erzeugen oder aufzunehmen.

Es hat sich gezeigt, dass Sender und Empfänger alternativ für die Erzeugung bzw. den Empfang von Funkwellen eingerichtet sein können und optional nur im Innenvolumen eines Gehäuses mit Gehäuseteilen aus Metall angeordnet sein können, und dennoch Funkwellen übertragen werden können. Dies wird darauf zurückgeführt, dass im Bereich eines Isolators, der zwischen zwei Gehäuseteilen angeordnet ist, Funkwellen hindurchtreten können.

Das Gehäuse hat den Vorteil, dass es ohne mechanischen Anschluß an einen Hochdruckbehälter innerhalb des Hochdruckbehälters angeordnet sein kann und geeignet ist, drahtlos Signale für vom Sensor aufgenommene Messwerte senden zu können, wobei die Messwerte durch einen Wandler für einen Sender, der einen Aktor bildet, durch eine Steuerungseinheit transformiert sein können, wobei die Signale außerhalb des Hochdruckbehälters empfangen werden können.

Generell können zumindest zwei hochdruckfeste Gehäuse, von denen optional eines einen an einem Behälter angeschlossenen Flansch als ein Gehäuseteil aufweist, eine Anordnung bilden, die z.B. zur Übertragung von Daten eingerichtet ist, indem eines der Gehäuse einen Sender aufweist und ein anderes einen Empfänger. Eine solche Anordnung kann z.B. an einem Hochdruckbehälter angeordnet sein, wobei ein hochdruckfestes Gehäuse, das in einen hochdruckfesten Behälter ragen kann, einen mit der Innenfläche der Behälterwand verbundenen Flansch als Gehäuseteil aufweist und das Innenvolumen des Gehäuses mit der Umgebung des Hochdruckbehälters in Verbindung steht, und ein anderes hochdruckfestes Gehäuse innerhalb des Hochdruckbehälters angeordnet ist. Alternativ kann eine Anordnung ein Gehäuse aufweisen, von dem ein Gehäuseteil ein Flansch ist, der mit dem Innenvolumen eines Behälters, der in einem Medium mit höherem Druck angeordnet ist, bzw. bei dem das Innenvolumen des Behälters einen niedrigeren Druck als die Umgebung aufweist. Optional kann eine Anordnung ein zweites Gehäuse aufweisen, das umfänglich geschlossen ist und im Medium höheren Drucks anzuordnen ist, wobei das eines der Gehäuse einen Sender enthält und das andere einen Empfänger.

Ein Gehäuse kann z.B. an einem Hochdruckbehälter angeordnet sein, wobei ein hochdruckfestes Gehäuse, das in einen hochdruckfesten Behälter ragen kann, einen mit der Innenfläche der Behälterwand verbundenen Flansch als Gehäuseteil aufweist und das Innenvolumen des Gehäuses mit der Umgebung des Hochdruckbehälters in Verbindung steht.

Die Gehäuseteile können gegeneinander beweglich miteinander verbunden sein, so dass die Gehäuseteile bei von außen auf das Gehäuse wirkendem Hochdruck aufeinander zu beweglich sind und an den isolierten Leiter gepresst werden. Eine Einrichtung, die die Gehäuseteile miteinander verbindet, wobei diese aufeinander zu beweglich sind, kann z.B. ein Bajonettverschluss sein, der an der Außenfläche oder an der Innenfläche der Gehäuseteile angreift und die z.B. in einem Winkel von 30 bis 90° zu einer Auflagefläche angeordnet ist, und/oder eine Feder, die die Gehäuseteile aufeinander zu belastet.

Ein Sensor, der außerhalb des Gehäuses angeordnet und an dem Gehäuse und/oder an den isolierten Leitern elektrisch angeschlossen ist, kann z.B. ein Temperatursensor, ein Leitfähigkeitssensor, Drucksensor, pH-Sensor, Strahlungssensor und/oder Aktor, z.B. eine Antenne sein.

Die Erfindung wird nun genauer mit Bezug auf die Figuren beschrieben, die schematisch in
- Figur 1 eine Ausführungsform der Vorrichtung im Schnitt,
- Figur 2 eine weitere Ausführungsformen der Vorrichtung in Explosionszeichnung,
- Figur 3 eine weitere Ausführungsformen der Vorrichtung in einem Hochdruckkessel im Schnitt,
- Figur 4 eine weitere Ausführungsform der Vorrichtung im Schnitt,
- Figur 5 eine Aufsicht auf einen isolierten Leiter,
- Figur 6 eine Explosionszeichnung eines isolierten Leiters, und
- Figur 7 eine weitere Ausführungsform der Vorrichtung im Schnitt zeigen.

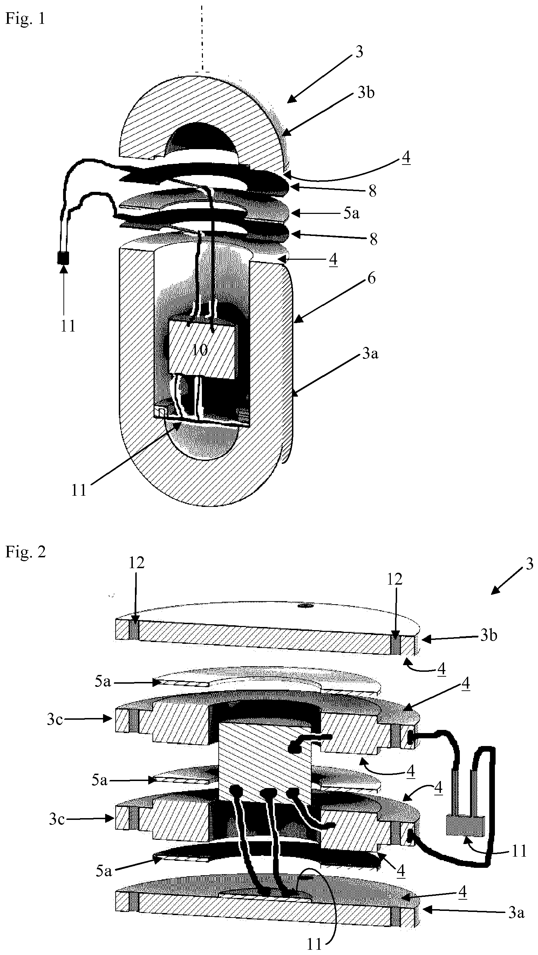

Die Figur 1 zeigt eine Ausführungsform, in der ein Gehäuse 3 aus einem ersten Gehäuseteil 3a und einem zweiten Gehäuseteil 3b gebildet ist und wobei alle Gehäuseteile 3a, 3b zueinander parallele deckungsgleiche Auflageflächen 4 aufweisen, zwischen denen ein Isolator 5a angeordnet ist. Die Auflageflächen 4 sind senkrecht zur Längsachse des Gehäuses 3 angeordnet und jeweils, wie bevorzugt, eben. Die Außenflächen aller Gehäuseteile 3a, 3b können, wie bevorzugt, mit einer Schicht eines Dielektrikums 6 überdeckt sein und dadurch gegeneinander und ggf. gegen ein umgebendes Medium elektrisch isoliert sein. Zwischen den beabstandeten Auflageflächen 4 der Gehäuseteile 3a, 3b ist der Isolator 5a einer einheitlichen Dicke angeordnet, der sich über die vollständige Auflagefläche 4 jedes Gehäuseteils 3a, 3b erstreckt. Zusätzlich ist, wie bevorzugt, jeweils zwischen dem Isolator 5a und der Auflagefläche 4 eines der Gehäuseteile 3a, 3b eine Leitung 8 angeordnet, die sich über die vollständige Auflagefläche 4 jedes Gehäuseteils 3a, 3b erstreckt. Optional kann die Leitung 8 von einem Dielektrikum überdeckt sein. Der Isolator 5a beabstandet die Gehäuseteile 3a, 3b voneinander, so dass diese auch elektrisch voneinander getrennt sind. Die Leitungen 8 liegen mit ihrer Seite gegenüber dem Isolator 5a unmittelbar an einem der Gehäuseteile 3a, 3b an. Bei Ausführung der Gehäuseteile 3a, 3b aus elektrisch leitfähigem Material stehen die Gehäuseteile 3a, 3b mit den Leitungen 8 in elektrischem Kontakt. Bei Ausführung elektrischer Leitungen 8 als Leitungsschicht zwischen zumindest einem Isolator 5a und einem Gehäuseteil 3a, 3b kann zumindest eines der Gehäuseteile 3a, 3b oder alle Gehäuseteile 3a, 3b, 3c aus elektrisch nicht leitfähigem Material bestehen. Optional (nicht dargestellt) kann zwischen jeder Leitung 8 und dem angrenzenden Gehäuseteil 3a, 3b ein weiterer Isolator 5a angeordnet sein, so dass jede Leitung 8 auf beiden gegenüberliegenden Flächen von Isolatoren 5a überdeckt ist.

An den Leitungen 8 ist außerhalb des Gehäuses 3 ein elektrisches Element 11, z.B. ein Sensor, insbesondere ein Temperatursensor mittels getrennter isolierter Leitungen 8 angeschlossen. Im Innenvolumen des Gehäuses 3 ist als elektrisches Element 11 ein Aktor 9, der ein Piezolautsprecher als Sender ist, über einen Wandler 10 mit den Leitungen 8 verbunden. Der Wandler 10 setzt die Messsignale des Sensors 11 in elektrische Steuersignale für den Sender um. In einer einfachen Variante ist der Wandler 10 eingerichtet, bei einem Messsignal des Sensors 11, das 0°C entspricht, den Sender mit Strom einer Frequenz von 33 kHz zu beaufschlagen, bei einem Messsignal, das 65 °C entspricht, mit einer Frequenz von 60 kHz. Der Piezolautsprecher war auf die Innenfläche des ersten Gehäuseteils 3a geklebt. Das Gehäuse 3 wurde in einen Hochdruckbehälter der Fa. Hyperbaric, Spanien, gelegt, dieser mit Wasser gefüllt und mittels einer Pumpe mit einem Druck 6000 bar beaufschlagt, die auf das Gehäuse 3 einwirkten. Ein außen auf den Hochdruckbehälter aufgeklebtes Piezomikrofon konnte die unterschiedlichen Frequenzen aufnehmen.

Alternativ können Gehäuseteile 3a, 3b aus elektrisch leitfähigem Material elektrische Leitungen bilden, da sie durch den Isolator 5a elektrisch voneinander getrennt sind, und es kann ein elektrisches Element an voneinander getrennten weiteren Gehäuseteilen 3a, 3b elektrisch angeschlossen sein. In dieser Ausführungsform kann ein elektrisches Element im Innenvolumen des Gehäuses 3 mit den Gehäuseteilen 3a, 3b verbunden sein.

Die Figur 2 zeigt eine Explosionszeichnung einer Ausführungsform, bei der erstes und zweites Gehäuseteil 3a, 3b plattenförmig sind. Die Auflageflächen 4 der Gehäuseteile 3a, 3b sind zueinander parallel und werden durch dazwischen angeordnete Isolatoren 5a elektrisch voneinander getrennt. Zwischen erstem und zweiten Gehäuseteil 3a, 3b sind dritte Gehäuseteile 3c angeordnet, jeweils voneinander und von den ersten und zweiten Gehäuseteilen 3a, 3b durch dazwischenliegenden Isolatoren 5a beabstandet und elektrisch getrennt. Die dritten Gehäuseteile 3c weisen zu den Auflageflächen 4 der Gehäuseteile 3a, 3b und zu den Isolatoren 5a parallele Auflageflächen 4 auf. Die dritten Gehäuseteile 3c sind aus elektrisch leitfähigen Material und bilden elektrische Leitungen 8 aus. Bevorzugt sind die Außenflächen aller Gehäuseteile 3a, 3b, 3c mit einer dielektrischen Beschichtung isoliert, so dass ein elektrisches Element 11 an getrennte Gehäuseteile 3a, 3b, 3c elektrisch angeschlossen werden kann. Die Ausführungsform von Figur 2 zeigt Bohrungen 12, die als Führungen für eine Spannvorrichtung dienen können, mit der das erste und zweite Gehäuseteil 3a, 3b gegeneinander belastet werden können, um eine flüssigkeitsdichte Anordnung der Gehäuseteile 3a, 3b, 3c gegen die dazwischen liegenden Isolatoren 5a zu erlauben. Dazu kann z.B. ein Anpressdruck in Höhe der Gewichtskraft des Bauteils auf die Auflageflächen 4 ausreichen. Bei Beaufschlagung des Gehäuses 3 mit von außen wirkendem Hochdruck wird der Anpressdruck auf die Auflageflächen durch den Druck erzeugt, der senkrecht zu den Auflageflächen auf die Gehäuseteile 3a, 3b, 3c wirkt.

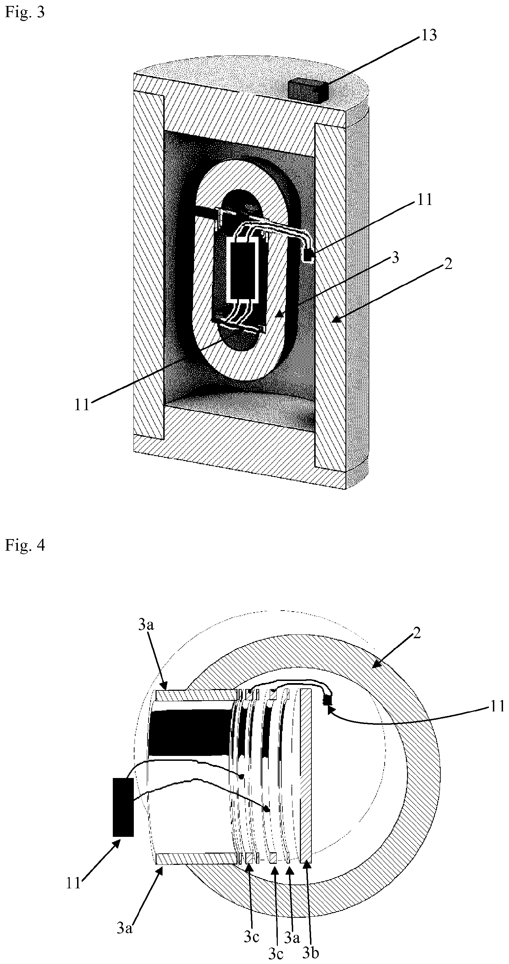

Die Figur 3 zeigt in einem Medium 1, das unter Hochdruck steht, z.B. in einem Hochdruckkessel 2, ein Gehäuse 3 gemäß Figur 1. An der Außenwand des Hochdruckkessels 2 ist ein Empfänger 13 befestigt, der eingerichtet ist, die von einem innerhalb des hochdruckfesten Gehäuses 3 angeordneten Sender als Aktor 9 erzeugten Schwingungen aufzunehmen.

Die Figur 4 zeigt eine Ausführungsform, bei der ein erstes Gehäuseteil 3a als Flansch ausgebildet ist, dessen Innenvolumen mit einem Bereich mit geringem Druck verbunden ist, beispielsweise Normal- oder Umgebungsdruck, wobei die Außenfläche des Gehäuses 3 dem Hochdruck ausgesetzt ist. Dabei kann beispielsweise das Gehäuse 3 innerhalb eines Hochdruckkessels 2 angeordnet sein. Das zweite Gehäuseteil 3b kann plattenförmig sein. Die weiteren Gehäuseteile 3c, die zwischen dem ersten Gehäuseteil 3a und zweiten Gehäuseteil 3b angeordnet sind, können beispielsweise ringförmig sein, wobei jeweils Isolatoren 5a zwischen den Gehäuseteilen 3a, 3b, 3c angeordnet sind, wie dies auch mit Bezug auf die Figur 2 beschrieben ist. Dabei kann das Gehäuse 3 ein erstes Gehäuseteil 3a und ein zweites Gehäuseteil 3b aufweisen, sowie zwischen diesem zumindest ein drittes Gehäuseteil 3c. Die Gehäuseteile 3a, 3b, 3c weisen jeweils einander zugewandte Auflageflächen 4 auf, und zwischen den Auflageflächen 4 benachbarter Gehäuseteile 3a, 3b, 3c sind isolierte Leiter 5 angeordnet. Die Gehäuseteile 3a, 3b, 3c schließen gemeinsam mit den isolierten Leitern 5 ein Innenvolumen ein, das durch das als Flansch ausgebildete erste Gehäuseteil 3a mit einem Bereich geringeren Drucks verbunden ist. An den aus den dritten Gehäuseteilen 3c gebildeten Leitungen 8 ist außerhalb des Gehäuses 3, bevorzugt mit isolierten Leitungen, ein elektrisches Element 11 angeschlossen, beispielsweise ein Sensor oder ein Aktor 9.

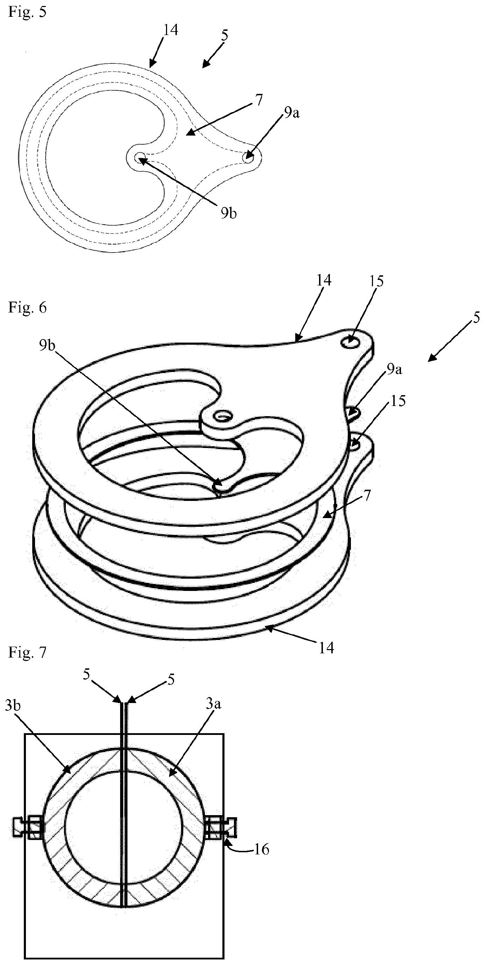

Die Figur 5 zeigt einen isolierten Leiter 5, bei dem ein Leiter 7 (gestrichelt), beispielsweise eine Kupferschicht, zwischen zwei Isolatorschichten 14 angeordnet ist. Die beiden Isolatorschichten 14, vorzugsweise aus Folie, z.B. aus Polyimid, überdecken auf beiden Seiten den Leiter 7 vollständig bis auf eine äußere Anschlussfahne 9a und eine innere Anschlussfahne 9b, sodass die Anschlussfahnen 9a, 9b jeweils eine Ausnehmung in zumindest einer der Isolatorschichten 14 aufweist, um eine Anschlussstelle für eine daran angeschlossene Leitung bereitzustellen, insbesondere für eine isolierte Leitung wie ein Kabel, insbesondere in Form eines Lötpads. Die hier gezeigte Form eines isolierten Leiters 5 ist zur Anordnung zwischen ringförmigen Auflageflächen 4 geeignet.

Der Leiter 7 ist umfänglich geschlossen und weist eine im Wesentlichen einheitliche Dicke auf, sodass der isolierte Leiter 5 mit den Isolatorschichten 14, die jeweils eine Isolatorfolie aufweisen oder daraus bestehen kann, eine einheitliche Dicke aufweist. Optional können die beiden Isolatorschichten 14 bzw. Isolatorfolien miteinander und/oder mit dem Leiter 7 stoffschlüssig verbunden sein, beispielsweise verklebt sein, optional mit einem zusätzlichen Kleber. Der Leiter 7 kann z.B. eine Dicke im Bereich von 5 bis 20 µm eines Metalls sein, bevorzugt Kupfer, eine bevorzugte Isolatorfolie ist Polyimid, z.B. Kapton.

Die Figur 6 zeigt den Aufbau des isolierten Leiters 5 in perspektivischer Explosionszeichnung. Der Leiter 7 ist wiederum ringförmig geschlossen zwischen Isolatorschichten 14 angeordnet und weist Anschlussfahnen 9a, 9b auf, die nur durch Ausnehmungen 15 in einer Isolatorschicht 14 als Lötpad zugänglich sind.

Die Figur 7 zeigt ein kugelförmiges erstes Gehäuseteil 3a und ein kugelförmiges zweites Gehäuseteil 3b, deren Auflageflächen 4 gegeneinander gerichtet sind und zwischen denen zwei isolierte Leiter 5 angeordnet sind. Die isolierten Leiter 5 können unmittelbar aufeinander aufliegen, wie hier gezeigt, oder durch ein drittes Gehäuseteil 3c voneinander beabstandet sein. Die Gehäuseteile 3a, 3b, 3c weisen zueinander parallele ringförmige Auflageflächen 4 auf, die jeweils eben sind.

Für eine Anordnung der Gehäuseteile 3a, 3b, 3c gegeneinander, sodass diese auch ohne die Wirkung eines auf die Außenfläche des Gehäuses 3 wirkenden Hochdrucks gegeneinander gepresst werden und zwischen sich bzw. zwischen ihren Auflageflächen 4 die isolierten Leiter 5 dicht einpressen, ist eine an einem Rahmen geführte Spannvorrichtung 16 gezeigt, die, wie generell bevorzugt, eingerichtet ist, das erste Gehäuseteil 3a gegen das zweite Gehäuseteil 3b bzw. gegen das dritte Gehäuseteil 3c jeweils senkrecht zu ihren Auflageflächen 4 gegeneinander zu belasten, wobei die Gehäuseteile 3a, 3b, 3c noch aufeinander zu beweglich sind. Eine solche Spanneinrichtung dient dazu, die Gehäuseteile 3a, 3b, 3c und dazwischen die isolierten Leiter 5 auch in Abwesenheit des Hochdrucks zueinander auszurichten und zu halten, sodass die Auflageflächen 4 gegeneinander, vorzugsweise deckungsgleich, in einem Abstand parallel zueinander angeordnet sind, wobei in dem Abstand zumindest ein isolierter Leiter 5 angeordnet ist.

## Patentansprüche

1. Druckfestes Gehäuse (3), das ein Innenvolumen umfasst, mit zumindest einem ersten Gehäuseteil (3a) und einem zweiten Gehäuseteil (3b), die beabstandet sind und einander zugewandte und zueinander passende parallele Auflageflächen (4) aufweisen, zwischen denen zumindest ein Isolator (5, 5a) angeordnet ist, auf dem die Auflageflächen (4) aufliegen, wobei zumindest ein elektrisches Element (11) außerhalb des Gehäuses (3) elektrisch mit einem weiteren elektrischen Element (11) im Innenvolumen des Gehäuses (3) verbindbar ist, **dadurch gekennzeichnet, dass** der Isolator (5, 5a) ein isolierter Leiter (5) ist, der zumindest einen zwischen zwei Isolatorschichten (14) eingefassten Leiter (7) aufweist, der sich zu einer äußeren Anschlussfahne (9a) über den Umfang des ersten Gehäuseteils (3a) und/oder des zweiten Gehäuseteils (3b) erstreckt und eine innere Anschlussfahne (9b) aufweist, die sich über das erste Gehäuseteil (3a) und/oder über das zweite Gehäuseteil (3b) in das Innenvolumen erstreckt, wobei zumindest eine Anschlussfahne (9a, 9b) des Leiters (7) durch eine Ausnehmung (15) in zumindest einer Isolatorschicht (14) zugänglich ist

2. Gehäuse (3) nach Anspruch 1, **dadurch gekennzeichnet, dass** die Auflageflächen (4) in parallelen Ebenen angeordnet sind.

3. Gehäuse (3) nach Anspruch 1, **dadurch gekennzeichnet, dass** der Leiter (7) um das Innenvolumen umfänglich geschlossen ist und sich nur mit seinen Anschlussfahnen (9a, 9b) über den Bereich der Auflageflächen (4) erstreckt.

4. Gehäuse (3) nach einem der Ansprüche 1 bis 3, **dadurch gekennzeichnet, dass** der isolierte Leiter (5) zumindest zwei beabstandete Leiter (7) aufweist, die jeweils eine äußere Anschlussfahne (9a) und eine innere Anschlussfahne (9b) aufweisen.

5. Gehäuse (3) nach Anspruch 4, **dadurch gekennzeichnet, dass** die zumindest zwei beabstandeten Leiter (7) im Bereich zwischen den Auflageflächen (4) um einen Abschnitt des Innenvolumens parallel zueinander verlaufen.

6. Gehäuse (3) nach einem der voranstehenden Ansprüche, **dadurch gekennzeichnet, dass** zumindest eines der Gehäuseteile (3a, 3b, 3c) elektrisch leitfähig ist, auf der Innenfläche und/oder auf der Außenfläche zumindest einen elektrischen Anschluß aufweist.

7. Gehäuse (3) nach einem der voranstehenden Ansprüche, **dadurch gekennzeichnet, dass** von zumindest einem der Gehäuseteile (3a, 3b, 3c) die Außenfläche von einer dielektrischen Schicht überzogen und elektrisch isoliert ist.

8. Gehäuse (3) nach einem der voranstehenden Ansprüche, **dadurch gekennzeichnet, dass** ein elektrisches Bauteil elektrisch mit den inneren Anschlussfahnen (9b) von zumindest zwei isolierten Leitern (5) und/oder mit der zumindest einen inneren Anschlussfahne (9b) und einem der Gehäuseteile (3a, 3b, 3c) elektrisch verbindbar ist.

9. Gehäuse (3) nach einem der voranstehenden Ansprüche, **dadurch gekennzeichnet, dass** zwischen den Auflageflächen (4) des ersten Gehäuseteils (3a) und des zweiten Gehäuseteils (3b) zumindest ein drittes Gehäuseteil (3c) angeordnet ist, dessen Auflagefläche (4) parallel und deckungsgleich zu den Auflageflächen (4) des ersten und des zweiten Gehäuseteils (3a, 3b) angeordnet sind, wobei zumindest ein Isolator (5, 5a) zwischen jedem der Gehäuseteile (3a, 3b, 3c) angrenzend an die Auflageflächen angeordnet ist.

10. Gehäuse (3) nach einem der voranstehenden Ansprüche, **dadurch gekennzeichnet, dass** ein elektrisches Bauteil elektrisch mit den äußeren Anschlussfahnen (9a) von zumindest zwei isolierten Leitern (5) und/oder mit der zumindest einen äußeren Anschlussfahne (9a) und einem elektrisch leitfähigen der Gehäuseteile (3a, 3b, 3c) elektrisch verbindbar ist.

11. Gehäuse (3) nach einem der voranstehenden Ansprüche, **dadurch gekennzeichnet, dass** eines von erstem und zweitem Gehäuseteil (3a, 3b) ein Flansch ist, dessen Innenvolumen mit einem Bereich eines niedrigeren Druckes als der Druck außerhalb des Gehäuses verbindbar ist.

12. Gehäuse (3) nach einem der voranstehenden Ansprüche, **dadurch gekennzeichnet, dass** die Gehäuseteile (3a, 3b, 3c) insgesamt eine anteilige oder vollständige Kugelform bilden.

13. Gehäuse (3) nach einem der voranstehenden Ansprüche, **dadurch gekennzeichnet, dass** es einen Aktor umfasst, der im Innenvolumen des Gehäuses (3) angeordnet und elektrisch mit einem außerhalb des Gehäuses (3) angeordneten Sensor verbunden ist, wobei der Aktor ein Sender und/oder ein Empfänger ist, der eingerichtet ist, akustische, optische oder elektromagnetische Signale zu erzeugen oder zu empfangen.

14. Gehäuse (3) nach einem der Ansprüche 1 bis 13, **dadurch gekennzeichnet, dass** zumindest einer der Leiter (7) ein elektrischer Leiter oder ein optischer Leiter ist und optional zumindest eines der Gehäuseteile (3a, 3b, 3c) aus elektrisch nicht leitfähigem Material besteht.

15. Hochdruckbehälter, in dem ein Gehäuse (3) nach einem der voranstehenden Ansprüche angeordnet ist, wobei der Hochdruckbehälter eingerichtet ist, dass sein Innenvolumen mit Hochdruck beaufschlagbar ist, **dadurch gekennzeichnet, dass** das Gehäuse (3) nicht an der Wand des Hochdruckbehälters angeschlossen ist und dass außerhalb des Hochdruckbehälters ein Empfänger für akustische, optische oder elektromagnetische Signale angeordnet ist.

## Claims

1. Pressure-resistant housing (3) comprising an inner volume having at least a first housing part (3a) and a second housing part (3b) that are spaced apart and have parallel bearing surfaces (4) facing one another and matching one another, between which at least one insulator (5, 5a) is arranged, on which the bearing surfaces (4) rest, wherein at least one electrical element (11) outside the housing (3) is electrically connectable to an additional electrical element (11) inside the inner volume of the housing (3), **characterized in that** the insulator (5, 5a) is an insulated conductor (5) that has at least one conductor (7) encompassed between two insulator layers (14), that extends beyond the circumference of the first housing part (3a) and/or of the second housing part (3b) to an outer terminal lug (9a), and that has an inner terminal lug (9b) which extends beyond the first housing part (3a) and/or beyond the second housing part (3b) into the inner volume, wherein at least one terminal lug (9a, 9b) of the conductor (7) is accessible through a recess (15) in at least one insulator layer (14).

2. Housing (3) according to claim 1, **characterized in that** the bearing surfaces (4) are arranged in parallel planes.

3. Housing (3) according to claim 1, **characterized in that** the conductor (7) is circumferentially closed around the inner volume and only with its terminal lugs (9a, 9b) extends beyond the area of the bearing surfaces (4).

4. Housing (3) according to one of claims 1 to 3, **characterized in that** the insulated conductor (5) has at least two spaced-apart conductors (7) that each have one outer terminal lug (9a) and one inner terminal lug (9b).

5. Housing (3) according to claim 4, **characterized in that** the at least two spaced-apart conductors (7) in the area between the bearing surfaces (4) run in parallel to one another about a section of the inner volume.

6. Housing (3) according to one of the preceding claims, **characterized in that** at least one of the housing parts (3a, 3b, 3c) is electrically conductive, has at least one electrical connection on the inner surface and/or on the outer surface.

7. Housing (3) according to one of the preceding claims, **characterized in that** the outer surface of at least one of the housing parts (3a, 3b, 3c) is covered by a dielectric layer and is electrically insulated.

8. Housing (3) according to one of the preceding claims, **characterized in that** an electrical component is electrically connectable to the inner terminal lugs (9b) of at least two insulated conductors (5) and/or to the at least one inner terminal lug (9b) and one of the housing parts (3a, 3b, 3c).

9. Housing (3) according to one of the preceding claims, **characterized in that** at least one third housing part (3c) is arranged between the bearing surfaces (4) of the first housing part (3a) and of the second housing part (3b), the bearing surface (4) of which third housing part (3c) is arranged parallel to and congruent with the bearing surfaces (4) of the first and second housing parts (3a, 3b), wherein at least one insulator (5, 5a) is arranged adjacent to the bearing surfaces between each of the housing parts (3a, 3b, 3c).

10. Housing (3) according to one of the preceding claims, **characterized in that** an electrical component is electrically connectable to the outer terminal lugs (9a) of at least two insulated conductors (5) and/or to the at least one outer terminal lug (9a) and an electrically conductive one of the housing parts (3a, 3b, 3c).

11. Housing (3) according to one of the preceding claims, **characterized in that** one of first and second housing parts (3a, 3b) is a flange, the inner volume of which is connectable to an area of lower pressure than the pressure outside the housing.

12. Housing (3) according to one of the preceding claims, **characterized in that** the housing parts (3a, 3b, 3c) as a whole form a partial or complete spherical shape.

13. Housing (3) according to one of the preceding claims, **characterized in that** it comprises an actuator which is arranged inside of the inner volume of the housing (3) and is electrically connected to a sensor arranged outside of the housing (3), wherein the actuator is a transmitter and/or a receiver that is set up to generate or receive acoustic, optical, or electromagnetic signals.

14. Housing (3) according to one of claims 1 to 13, **characterized in that** at least one of the conductors (7) is an electrical conductor or an optical conductor and optionally at least one of the housing parts (3a, 3b, 3c) consists of electrically non-conductive material.

15. High-pressure container, in which a housing (3) according to one of the preceding claims is arranged, wherein the high-pressure container is set up so that high pressure can be applied to its inner volume, **characterized in that** the housing (3) is not connected to the wall of the high-pressure container and **in that** a receiver for acoustic, optical, or electromagnetic signals is arranged outside of the high-pressure container.

## Revendications

1. Boîtier résistant à la pression (3) comprenant un volume intérieur, avec au moins une première partie de boîtier (3a) et une deuxième partie de boîtier (3b) qui sont espacées l'une de l'autre et présentent des surfaces d'appui parallèles (4) se faisant face et s'adaptant l'une à l'autre, entre lesquelles au moins un isolateur (5, 5a) est disposé, au-dessus lequel reposent les surfaces d'appui (4), au moins un élément électrique (11) à l'extérieur du boîtier (3) pouvant être relié électriquement à un autre élément électrique (11) dans le volume intérieur du boîtier (3), **caractérisé en ce que** l'isolateur (5, 5a) est un conducteur isolé (5) qui présente au moins un conducteur (7) enfermé entre deux couches d'isolant (14), qui s'étend jusqu'à une cosse de raccordement extérieure (9a) au-dessus la circonférence de la première partie de boîtier (3a) et/ou de la deuxième partie de boîtier (3b), et qui présente une cosse de raccordement intérieure (9b) qui s'étend au-dessus la première partie de boîtier (3a) et/ou au-dessus la deuxième partie de boîtier (3b) dans le volume intérieur, au moins une cosse de raccordement (9a, 9b) du conducteur (7) étant accessible à travers d'un évidement (15) dans au moins une couche isolante (14).

2. Boîtier (3) selon la revendication 1, **caractérisé en ce que** les surfaces d'appui (4) sont disposées dans des plans parallèles.

3. Boîtier (3) selon la revendication 1, **caractérisé en ce que** le conducteur (7) est fermé circonférentiellement autour du volume intérieur et s'étend seulement avec ses pattes terminales (9a, 9b) au-dessus la région des surfaces d'appui (4).

4. Boîtier (3) selon l'une quelconque des revendications 1 à 3, **caractérisé en ce que** le conducteur isolé (5) comporte au moins deux conducteurs (7) espacés l'un de l'autre, comportant chacun une cosse extérieure (9a) et une cosse intérieure (9b).

5. Boîtier (3) selon la revendication 4, **caractérisé en ce que** les au moins deux conducteurs espacés (7) s'étendent parallèlement l'un à l'autre dans la région entre les surfaces d'appui (4) autour d'une section du volume intérieur.

6. Boîtier (3) selon l'une des revendications précédentes, **caractérisé en ce qu'**au moins une des parties du boîtier (3a, 3b, 3c) est électriquement conductrice, présente au moins une connexion électrique au-dessus la surface intérieure et/ou au-dessus la surface extérieure.

7. Boîtier (3) selon l'une des revendications précédentes, **caractérisé en ce que** la surface extérieure d'au moins une des parties du boîtier (3a, 3b, 3c) est recouverte d'une couche diélectrique et est isolée électriquement.

8. Boîtier (3) selon l'une des revendications précédentes, **caractérisé en ce qu'**un composant électrique peut être relié électriquement aux cosses intérieures (9b) d'au moins deux conducteurs isolés (5) et/ou à la au moins une cosse intérieure (9b) et à l'une des parties du boîtier (3a, 3b, 3c).

9. Boîtier (3) selon l'une des revendications précédentes, **caractérisé en ce qu'**au moins une troisième partie de boîtier (3c) est disposée entre les surfaces d'appui (4) de la première partie de boîtier (3a) et de la deuxième partie de boîtier (3b), la surface d'appui (4) de cette troisième partie de boîtier (3c) étant disposée parallèlement et en coïncidence avec les surfaces d'appui (4) de la première et de la deuxième partie de boîtier (3a, 3b), au moins un isolateur (5, 5a) étant disposé entre chacune des parties de boîtier (3a, 3b, 3c) adjacentes aux surfaces d'appui.

10. Boîtier (3) selon l'une des revendications précédentes, **caractérisé en ce qu'**un composant électrique peut être relié électriquement aux cosses extérieures (9a) d'au moins deux conducteurs isolés (5) et/ou à la au moins une cosse extérieure (9a) et à une partie électriquement conductrice du boîtier (3a, 3b, 3c).

11. Boîtier (3) selon l'une des revendications précédentes, **caractérisé en ce que** l'une des première et seconde parties du boîtier (3a, 3b) est une bride dont le volume intérieur peut être relié à une région de pression inférieure à la pression à l'extérieur du boîtier.

12. Boîtier (3) selon l'une des revendications précédentes, **caractérisé en ce que** les parties du boîtier (3a, 3b, 3c) forment ensemble une forme sphérique partielle ou complète.

13. Boîtier (3) selon l'une des revendications précédentes, **caractérisé en ce qu'**il comprend un actionneur disposé dans le volume interne du boîtier (3) et relié électriquement à un capteur disposé à l'extérieur du boîtier (3), l'actionneur étant un émetteur et/ou un récepteur agencé pour générer ou recevoir des signaux acoustiques, optiques ou électromagnétiques.

14. Boîtier (3) selon l'une quelconque des revendications 1 à 13, **caractérisé en ce qu'**au moins l'un des conducteurs (7) est un conducteur électrique ou un conducteur optique et optionellement au moins l'une des parties du boîtier (3a, 3b, 3c) est réalisée en matériau non conducteur électrique.

15. Récipient à haute pression, dans lequel est disposé un boîtier (3) selon l'une des revendications précédentes, le récipient à haute pression étant disposé de telle sorte que son volume intérieur puisse être soumis à une haute pression, **caractérisé en ce que** le boîtier (3) n'est pas relié à la paroi du récipient à haute pression et **en ce qu'**un récepteur de signaux acoustiques, optiques ou électromagnétiques est disposé à l'extérieur du récipient à haute pression.
